**Europäisches Patentamt**

**European Patent Office**

**Office européen des brevets**

(19)

(11) Veröffentlichungsnummer: **0 012 151**
**B1**

(12) **EUROPÄISCHE PATENTSCHRIFT**

(45) Veröffentlichungstag der Patentschrift: **22.09.82**

(21) Anmeldenummer: **79102117.3**

(22) Anmeldetag: **26.06.79**

(51) Int. Cl.³: **C 10 J 3/46**, C 10 J 3/52, C 10 J 3/72, C 10 J 3/86

(54) Verfahren und Vorrichtung zum Beseitigen von bei der Kohlevergasung anfallender Schlacke.

(30) Priorität: **29.06.78 DE 2828562**

(43) Veröffentlichungstag der Anmeldung:
**25.06.80 Patentblatt 80/13**

(45) Bekanntmachung des Hinweises auf die Patenterteilung:
**22.09.82 Patentblatt 82/38**

(84) Benannte Vertragsstaaten:
**BE DE FR GB NL**

(56) Entgegenhaltungen:
**DE - A - 2 411 086**
**DE - C - 912 385**
**FR - A - 1 208 947**
**GB - A - 873 398**
**US - A - 3 000 711**
**US - A - 3 957 458**
**US - A - 3 998 606**

Die Akte enthält technische Angaben die nach dem Eingang der Anmeldung eingereicht wurden und die nicht in dieser Patentschrift enthalten sind.

(73) Patentinhaber: **Ruhrkohle Aktiengesellschaft**
**Rellinghauser Strasse 1**
**D-4300 Essen 1 (DE)**

(73) Patentinhaber: **Ruhrchemie Aktiengesellschaft**
**Bruchstrasse 172**
**D-4200 Oberhausen (DE)**

(72) Erfinder: **Langhoff, Josef, Dr.**
**Kleinbergerhof 10**
**D-4220 Dinslaken (DE)**
Erfinder: **Seipenbusch, Jürgen**
**Falterweg 17**
**D-4300 Essen 14 (DE)**

Courier Press, Leamington Spa, England.

EP 0 012 151 B1

# Verfahren und Vorrichtung zum Beseitigen von bei der Kohlevergasung anfallender Schlacke

Die Erfindung betrifft ein Verfahren und eine Vorrichtung zur Beseitigung der in einem Reaktor bzw. einem nachgeschalteten Abhitzekessel bei mangelndem Ausbrand bei der Vergasung von Kohle anfallenden und sich in einem Wasserbad im Reaktorfuß bzw. Fuß des Abhitzekessels sammelnden Schlacke.

Bei der Vergasung von Kohle ist der Ausbrand entscheidendes Kriterium. Bei mangeldem Ausbrand entsteht schwimmfähige Schlacke, die nicht durch das Wasserbad ausgetragen werden kann, d.h., nicht im Wasserbad absinkt. Deshalb muß der Reaktorbetrieb in Abständen zum Austragen der auf dem Wasserbad schwimmenden Schlacke unterbrochen werden. Das Austragen erfolgt von Hand und stellt einen erheblichen Nachteil dar. Das gleiche gilt für die Betriebsunterbrechung des Reaktors.

Der Erfindung liegt daher die Aufgabe zugrunde, einen kontinuierlichen Reaktorbetrieb herzustellen, indem sich ein Austragen von Hand erübrigt. Dabei geht die Erfindung von dem Gedanken aus, die Schwimmfähigkeit der Schlacke zu beseitigen.

Nach der Erfindung wird das mit Hilfe von Ölen als Additiven erreicht, die die Schlackenteile miteinander verbinden. Dadurch entstehen größere Schlackenteile mit mittleren, sich aus dem Gewicht der schwimmfähigen und nicht schwimmfähigen Schlackenteile ergebenden Gewicht, das ein Absinken der Schlackenteile im Wasserbad sicherstellt.

Die schweren Schlackenteile ziehen aufgrund ihrer Verbindung mit den schwimmfähigen, leichteren Schlackenteilen diese mit nach unten.

In weiterer Ausbildung der Erfindung wird schweres Heizöl als Additiv eingesetzt. Das Öl Kann seine zum Einsatz im Reaktor notwendige Fließfähigkeit durch eine Vorwärmung erreichen. Als Wärmsträger für die Vorwärmung dient wahlweise Prozeßgas oder Prozeßdampf aus dem Vergasungsprozeß.

In der Zeichnung ist ein Ausführungsbeispiel der Erfindung dargestellt. Es zeigen:

Figur 1 Eine schematische Gesamtdarstellung der erfindungswesentlichen Teile einer Reaktoranlage,

Figur 2—4 Einzelheiten der Reaktoranlage nach Figur 1.

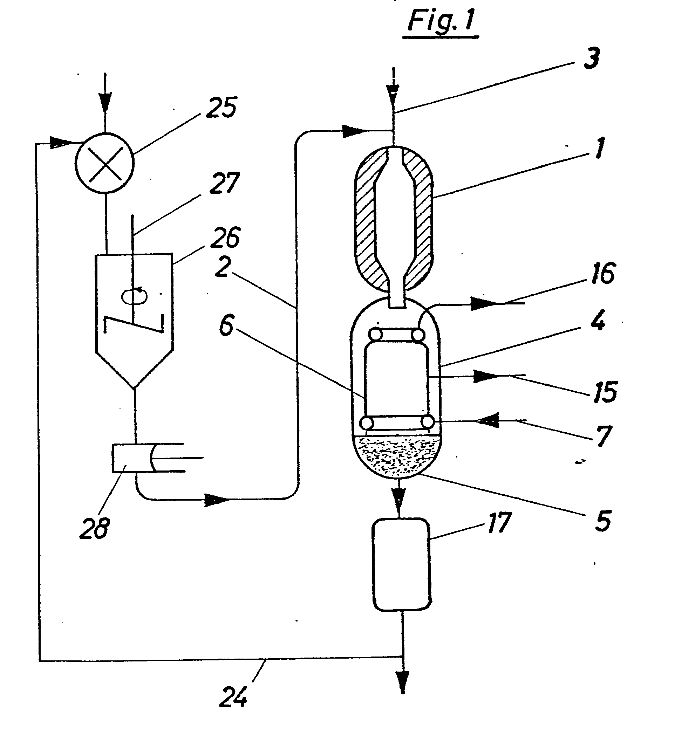

Gemäss Fig. 1 wird in einen Brenner mit einer Pumpe 28 durch eine Zuleitung 2 eine Kohle-Wasser-Suspension gedrückt. Als Kohle findet Kohlestaub Verwendung. Der Kohlestaub entsteht nach entsprechenden Mahlen in einer Mühle 25. Nach dem Mahlen gelangt der Kohlestaub zusammen mit Wasser in ein Rührwerk 26. Am Boden des Rührwerks wird kontinuierlich die Kohle-Wasser-Suspension abgezogen.

Zusammen mit der Kohle-Wasser-Suspension gelangt Sauerstoff durch eine Zuleitung 3 in den Brenner und über den Brenner in einen Reaktor 1. Im Reaktor 1 verdampft das der Kohle anhaftende Wasser und wird die Kohle auf Reaktionstemperatur gebracht. Bei einer Temperatur von ca. 1.400°C und einem Druck von etwa 30 bar entsteht aus der Kohle, aus dem Sauerstoff und dem Wasserdampf in der Hauptsache sogenanntes Synthesegas. Das Synthesegas besteht aus Kohlenmonoxyd und Wasserstoff.

Das gewonnene Synthesegas gelangt aus dem Reaktor 1 in einen sich unter dem Reaktor 1 befindenden Abhitzekessel 4. Der Abhitzekessel 4 nimmt auch die mit dem entstandenen Gas aus dem Reaktor 1 ausgetragenen Schlackenteile auf. Die Schlacke fällt in erster Linie in flüssiger Form an und sammelt sich in bzw. auf einem Wasserbad 5 im Fuß des Abhitzekessels 4.

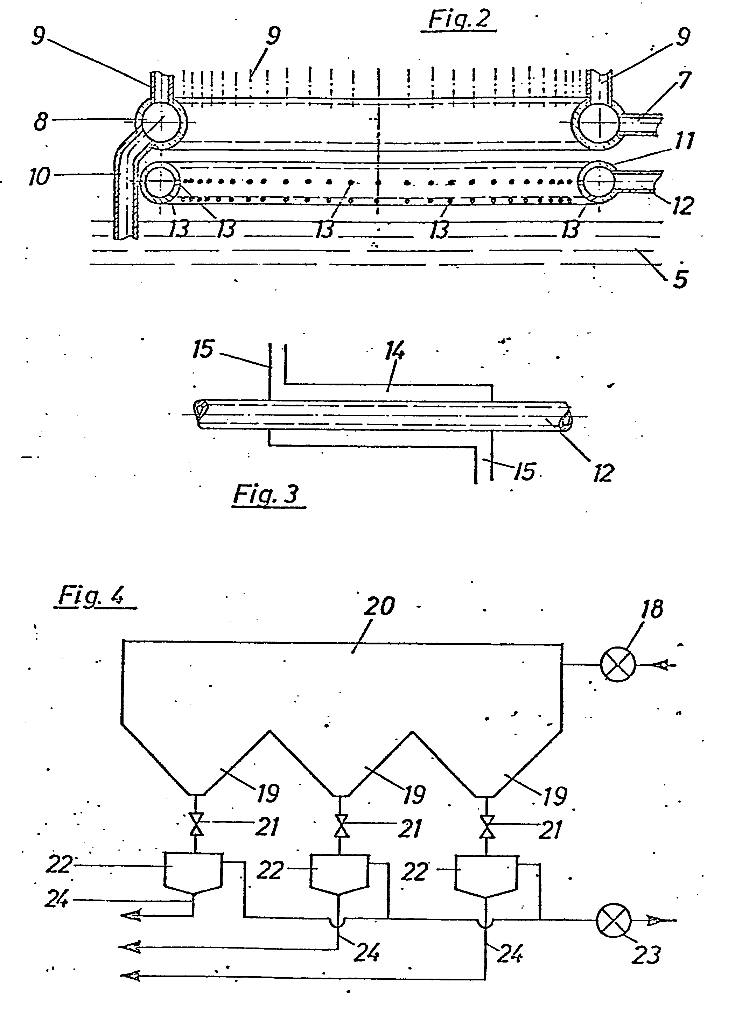

Im Abhitzekessel 4 findet eine erste Abkühlung des gewonnenen Synthesegases statt. Dazu ist der Abhitzekessel 4 mit einer Rohrwandung 6 versehen. Die Rohrwandung besitzt einen Kühlwasserzufluß 7 und einen Abfluß für das erwärmte Dampf-Wassergemisch. Der Kühlwasserzufluß 7 mündet nach Figur 2 in einer Ringleitung 8. Von der Ringleitung 8 gehen eine Vielzahl gleichmäßig am Umfang verteilte Kühlrohre 9 aus. Durch die Kühlrohre 9, die in Fig. 2 bis auf zwei schematisch mit deren Mittellinien dargestellt sind, steigt das Kühlwasser infolge seiner Erwärmung nach oben. Dementsprechend handelt es sich bei den Kühlrohren 9 um Steigrohre.

Außer den Kühlrohren 9 befindet sich noch eine Abflußleitung 10 an der Ringleitung 8. Die Abflußleitung 10 ist dem Kühlwasserzufluß 7, diametral gegenüberliegend an der Ringleitung 8 angeordnet und besitzt einen mit den Kühlrohren 9 abgestimmten Durchflußquerschnitt, so daß der Kühlmittelstrom in den Kühlrohren 9 durch den kontinuierlichen Abfluß von Wasser aus der Abflußleitung 10 nicht gestört wird.

Die Abflußleitung 10 ist um eine weitere, genau unterhalb der Ringleitung 8 angeordnete Ringleitung 11 herumgeführt. Die Ringleitung 11 ist wie die Ringleitung 8 mit einer Zuleitung 12 versehen, die oberhalb des Badspiegels des Wasserbades 5 mündet. Durch die Zuleitung 12 wird das Öl in die Ringleitung 11 gedrückt. Aus der Ringleitung 11 gelangt das Öl durch eine Vielzahl gleichmäßig verteilter Düsen 13 in Form von Strahlen auf den Badspiegel des Wasserbades 5. Bevorzugt sind dabei die Ölstrahlen auf die Mittelachse des Wasserbades 5 gerichtet. Sie können auch in einem unterschiedlichen Winkel zum Badspiegel des Wasserbades 5 ausgerichtet sein und somit unterschiedliche Neigung aufweisen.

Nach Figur 2 sind die Düsen 13 in zwei Reihen übereinander am inneren Umfang der Ringleitung 11 angeordnet.

Innerhalb jeder Düsenreihe können die Düsen 13 die gleichen Neigungen zum Badspiegel des Wasserbades besitzen, die können aber auch von Reihe zu Reihe eine unterschiedliche Neigung zum Badspiegel des Wasserbads 5 aufweisen und verlaufen dann in verschiedenen Winkeln zum Badspiegel des Wasserbades 5. Diese Anordnung der Düsen hat den Vorteil, daß das aus der Ringleitung 11 austretende Öl die auf dem Badspiegel des Wasserbades 5 auftreffenden Schlackenpartikel zur Mitte des Badspiegels hin gegeneinander bewegt. Die einzelnen Schlackenpartikel kommen in eine intensive Berührung miteinander, so daß das Öl als die Schlackenpartikel miteinander verbindendes Additiv seine optimale Wirkung entfalten kann.

Die Ringleitung 11 befindet sich dicht oberhalb des Badspiegels. Gleichzeitig sind die an der Innenseite der Ringleitung 11 angeordneten Düsen 13 so groß ausgelegt, daß lediglich kompakte Ölstrahlen entstehen. Beides wirkt einem Entflammen des Öles und einem nennenswerten Ölverlust entgegen.

Bei schwerem Heizöl erlangt dies eine zum Durchströmen der Leitungen 11 und 12 und Durchdringen der Düsen 13 notwendige Fließfähigkeit durch eine Vorwärmung und eine nachfolgende Erwärmung im Abhitzekessel 4 bzw. in der Ringleitung 11.

Die Vorwärmung erfolgt in der Zuleitung 2 außerhalb des Abhitzekessels 4 durch Prozessgas und/oder Prozessdampf. Dazu ist die Zuleitung 12 nach Figur 3 durch einen zusammen mit der Zuleitung 12 einen Wärmetauscher bildenden Behälter 14 hindurchgeführt. Der Behälter 14 umschließt die Zuleitung 12 rohrförmig und ist in eine Abgasleitung 15 eingebunden.

Durch die Abgasleitung 15 kann das in dem Reaktor erzeugte Synthesegas aus dem Abhitzekessel 4 abgeleitet werden. Das Synthesegas muß eine kontrollierte Kühlung erfahren, damit es nicht zu unerwünschten Aufbaureaktionen kommt. Für eine notwendige Kühlung ist die mit der Vorwärmung des schweren Heizöles verbundene Kühlung zu gering. Deshalb wird das Abgas darüber hinaus in einem nicht dargestellten, wassergekühlten Abhitzekessel gekühlt. Der dabei entstehende Dampf wird zusammen mit dem aus dem Abhitzekessel 4 anfallenden Dampf einer beliebigen Verwendung zugeführt. Die Abdampfleitung des Abhitzekessels 4 ist mit 16 bezeichnet.

Das solchermaßen gekühlte Synthesegas wird in einem nachfolgenden Verfahrensgang mit Wasser beaufschlagt. Die Beaufschlagung erfolgt durch Besprühen, sogenanntes Quenschen. Beim Quenschen wird das Synthesegas von unerwünschten Aschebestandteilen befreit. Das aus dieser Abgaswäsche resultierende Wasser-Aschegemisch wird anschließend eingedickt, das bei der Eindickung anfallende Wasser der Quenschung zurückgeführt und der Rest ein Aschebrei, mit dem Einsatzgut des Reaktors vermischt. Diese Vermischung der Schlacke mit dem Einsatzgut erleichtert das Erreichen der für die Vergasung notwendigen hohen Temperaturen.

Die sich in dem Wasserbad 5 des Abhitzekessels 4 in Klumpen sammelnde Schlacke gelangt in eine unterhalb des Abhitzekessels 4 angeordnete offene Schleuse 17. Sie sammelt sich dort, bis die Schleuse einen bestimmten Füllungsgrad erreicht hat. Danach wird die Schleuse 17 geschlossen, sodass sich die mit fortschreitendem Reaktorbetrieb anfallende Schlacke nunmehr vor dem Schleuseneingang, ansammelt.

Nach Schließen des Schleuseneinganges wird der Schleusenausgang der Schleuse 17 geöffnet, sodass die Schlacke aus der Schleuse 17 mit geringem Betriebsdruck ohne Beeinträchtigung des notwendigen Reaktorbetriebsdruckes abgezogen werden kann. Zum Abziehen der Schlacke ist eine Pumpe 18 vorgesehen. Die Pumpe 18 fördert die Schlacke nach Figur 4 horizontal in einen sich aus mehreren Trichtern 19 zusammensetzenden Behälter 20. In dem Behälter 20 sinken die schwereren Schlackenpartikel in den dem Behältereingang nächsten Trichter 19, während die leichteren Schlackenpartikel aufgrund ihrer geringeren Sinkgeschwindigkeit in entferntere Trichter 19 gelangen. Da das Gewicht zugleich kennzeichnend für den Ausbrand der Schlackenpartikel ist, bewirkt das eine Klassierung der Schlackenpartikel. Aus den einzelnen Trichtern 19 kann die Schlacke nach Belieben abgezogen werden. Die notwendige Steuerung erfolgt über Schieber 21.

Aus dem Trichter 19 gelangen die Schlackenpartikel in Eindicker 22. Das beim Eindicken freiwerdende Wasser wird über eine Pumpe 23 abgezogen und dem Speisewasser zugeführt. Die eingedickte Schlacke kann verschiedenen Verwendungszwecken zugeführt werden. Mindestens ein Teil der Schlacke wird mit dem Einsatzgut des Reaktors vermischt. Dazu ist mindestens eine der von den Eindickern 22 wegführenden Leitungen 24 mit dem Mühleneingang der das Einsatzgut mahlenden Mühle 25 verbunden. Eine in die Leitung 24 geschaltete und beispielsweise als Kolben oder Flügelradpumpe ausgebildete Pumpe stellt eine ausreichende Schlackenbewegung in der Leitung 24 sicher.

Die Leitung 24 ist wahlweise mit der Leitung für die Rückführung des nach dem Quenschen eingedickten Aschebreis gekoppelt. Andererseits braucht dieser Aschebrei nicht mehr gemahlen zu werden. Er kann auch sofort in das Rührwerk 26, dessen Rührer mit 27 bezeichnet ist, eingeleitet werden.

Die dem Rührwerk 26 nachgeschaltete und das Einsatzgut in den Brenner fördernde Pumpe 28 arbeitet mit dem für den Reaktor erforderlichen Betriebsdruck.

In einen Reaktor mit integriertem Wasserbad und Schwierigkeiten bei der Zuführung von Öl oberhalb des Wasserbades wird das Öl durch das Wasserbad hindurch hinzugeführt. Dann befindet sich die Ringleitung 11 nicht dicht oberhalb, sondern dicht unterhalb des Badspiegels des Wasserbades 5. Dazu bedarf es lediglich der Anhebung des Badspiegels durch vermehrten Wasserzufluß.

## Patentansprüche

1. Verfahren zur Beseitigung der in einem Reaktor bzw. in einem nachgeschalteten Abhitzekessel bei mangelndem Ausbrand bei der Vergasung von Kohle anfallenden und sich in einem Wasserbad im Reaktorfuß bzw. Fuß des Abhitzekessels sammelnden Schlacke, dadurch gekennzeichnet, daß den Schlacketeilen vor dem Austrag diese miteinander verbindende Öle als Additive beigemengt werden.

2. Verfahren nach Anspruch 1, dadurch gekennzeichnet, daß als Öl ein schweres Heizöl zugegeben wird.

3. Verfahren nach Anspruch 2, dadurch gekennzeichnet, daß das schwere Heizöl vorgewärmt wird.

4. Verfahren nach Anspruch 3, gekennzeichnet durch eine Vorwärmung mit Prozeßgas und/oder Prozeßdampf.

5. Verfahren nach einem oder mehreren der Ansprüche 1 bis 4, dadurch gekennzeichnet, daß das Öl in Strahlen auf den Badspiegel gesprüht wird.

6. Verfahren nach Anspruch 5, dadurch gekennzeichnet, daß die Strahlen auf die Mittelachse des Wasserbades (5) gerichtet sind.

7. Verfahren nach Anspruch 5 oder 6, dadurch gekennzeichnet, daß die Strahlen in einem unterschiedlichen Winkel zum Badspiegel des Wasserbades (5) ausgerichtet sind.

8. Vorrichtung zur Durchführung des Verfahrens nach einem oder mehreren der Ansprüche 1—7, gekennzeichnet durch eine kombinierte Ölzu- und Ringleitung (11, 12) zum Wasserbad (5).

9. Vorrichtung nach Anspruch 8, dadurch gekennzeichnet, daß die Ölzuleitung (12) oberhalb des Badspiegels des Wasserbades (5) mündet.

10. Vorrichtung nach Anspruch 8 oder 9, gekennzeichnet durch eine Vielzahl von Düsen (13) in der Ringleitung (11).

11. Vorrichtung nach Anspruch 10, dadurch gekennzeichnet, daß die Düsen (13) an der Innseite der Ringleitung (11) angeordnet sind.

12. Vorrichtung nach Anspruch 10 oder 11, dadurch gekennzeichnet, daß die Düsen (13) gegen die Mittelachse des Wasserbades (5) geneigt angeordnet sind.

13. Vorrichtung nach einem oder mehreren der Ansprüche 10 bis 12, dadurch gekennzeichnet, daß die Düsen (13) unterschiedliche Neigungen aufweisen.

14. Vorrichtung nach Anspruch 13, gekennzeichnet durch mehrere Reihen von Düsen (13), wobei die Düsen (13) in jeder Reihe die gleichen Neigungen zum Badspiegel des Wasserbades (5) und von Reihe zu Reihe eine unterschiedliche Neigung zum Badspiegel des Wasserbades (5) besitzen.

## Revendications

1. Procédé pour éliminer les scories qui se produisent dans un réacteur, ou dans une chaudière récupératrice qui le suit, en cas de combustion incomplète lors de la gazéification du charbon, et qui se rassemblent dans une cuvette d'eau au bas du réacteur ou de la chaudière récupératrice, caractérisé en ce qu'avant l'évacuation, on ajoute aux particules de scories du fuel à titre d'additif les faisant s'agglomérer.

2. Procédé selon la revendication 1, caractérisé en ce que le fuel ajouté est du fuel lourd.

3. Procédé selon la revendication 2, caractérisé en ce que le fuel lourd est préchauffé.

4. Procédé selon la revendication 3, caractérisé par un préchauffage au gaz et/ou à la vapeur produits au cours de la gazéification.

5. Procédé selon l'une ou plusieurs des revendications 1 à 5, caractérisé en ce que le fuel gicle sous forme de jets sur la surface de l'eau de la cuvette.

6. Procédé selon la revendication 5, caractérisé en ce que les jets sont dirigés sur l'axe de la cuvette d'eau (5).

7. Procédé selon la revendication 5 ou 6, caractérisé en ce que les jets sont pointés sous un angle différent par rapport au plan d'eau de la cuvette (5).

8. Dispositif pour la mise en oeuvre du procédé selon l'une ou plusieurs des revendications 1 à 7, caractérisé par une combinaison de conduite annulaire et de conduite d'amenée de fuel (11, 12) vers la cuvette d'eau (5).

9. Dispositif selon la revendication 8, caractérisé en ce que la conduite d'amenée de fuel (12) débouche au-dessus du niveau de l'eau de la cuvette (5).

10. Dispositif selon la revendication 8 ou 9, caractérisé par une série d'injecteurs (13) sur la conduite annulaire (11).

11. Dispositif selon la revendication 10, caractérisé en ce que les injecteurs (13) sont disposés sur le côté intérieur de la conduite annulaire (11).

12. Dispositif selon la revendication 10 ou 11, caractérisé en ce que les injecteurs (13) sont inclinés par rapport à l'axe de la cuvette d'eau (5).

13. Dispositif selon l'une ou plusieurs des revendications 10 à 12, caractérisé en ce que les injecteurs (13) présentent des inclinaisons différentes.

14. Dispositif selon la revendication 13, caractérisé par plusieurs rangées d'injecteurs (13), lesdits injecteurs possédant dans chaque rangée les mêmes inclinaisons par rapport au plan d'eau de la cuvette (5), et d'une rangée à l'autre une différence d'inclinaison par rapport audit plan d'eau.

Claims

1. Method for the removal of slag resulting in a reactor or in a subsequent waste heat boiler during incomplete combustion in the gasification of coal, and accumulating in a water bath in the foot of the reactor or the foot of the boiler, characterised in that, before the discharge, there is added to the slag particles oil as additive binding them together.

2. Method according to claim 1, characterised in that a heavy heating oil is added as the oil.

3. Method according to claim 2, characterised in that the heavy heating oil is preheated.

4. Method according to claim 3, characterised by a pre-heating with process gas and/or process steam.

5. Method according to one or more of claims 1 to 4, characterised in that the oil is sprayed in jets onto the bath surface.

6. Method according to claim 5, characterised in that the jets are directed towards the central axis of the water bath (5).

7. Method according to claim 5 or 6, characterised in that the jets are directed at a differing angle to the bath surface of the water bath (5).

8. Apparatus for carrying out the method according to one or more of claims 1—7, characterised by a combined oil supply and ring pipe (11, 12) to the water bath (5).

9. Apparatus according to claim 8, characterised in that the oil supply pipe (12) opens above the bath surface of the water bath (5).

10. Apparatus according to claim 8 or 9, characterised by a plurality of nozzles (13) in the ring pipe (11).

11. Apparatus according to claim 10, characterised in that the nozzles (13) are arranged on the inner side of the ring pipe (11).

12. Apparatus according to claim 10 or 11, characterised in that the nozzles (13) are arranged inclined relatively to the central axis of the water bath (5).

13. Apparatus according to one or more of claims 10 to 12, characterised in that the nozzles (13) have differing inclinations.

14. Apparatus according to claim 13, characterised by a plurality of rows of nozzles (13), while the nozzles (13) in each row possess the same inclination to the bath surface of the water bath (5) and from row to row a differing inclination to the bath surface of the water bath (5).

_Fig.1_

*Fig.2*

*Fig. 3*

*Fig. 4*

2